(19) Europäisches Patentamt / European Patent Office / Office européen des brevets

(11) EP 2 224 212 A1

(12) **EUROPÄISCHE PATENTANMELDUNG**

(43) Veröffentlichungstag:
  **01.09.2010 Patentblatt 2010/35**

(51) Int Cl.:
  ***G01C 21/34*** *(2006.01)*

(21) Anmeldenummer: **10153794.2**

(22) Anmeldetag: **17.02.2010**

(84) Benannte Vertragsstaaten:
  **AT BE BG CH CY CZ DE DK EE ES FI FR GB GR HR HU IE IS IT LI LT LU LV MC MK MT NL NO PL PT RO SE SI SK SM TR**

(30) Priorität: **26.02.2009 DE 102009010381**
  **29.09.2009 DE 102009043309**

(71) Anmelder: **Navigon AG**
  **20251 Hamburg (DE)**

(72) Erfinder:
  • **Englerth, Harald**
   **97080, Würzburg (DE)**

  • **Schmidt, Thorsten W.**
   **97318, Kitzingen (DE)**
  • **Ros, Feliu**
   **97072, Würzburg (DE)**

(74) Vertreter: **von den Steinen, Axel**
  **Advotec.**
  **Patent- und Rechtsanwälte**
  **Beethovenstrasse 5**
  **97080 Würzburg (DE)**

(54) **Verfahren und Navigationseinrichtung zur Ermittlung der voraussichtlichen Fahrzeit**

(57) Die Erfindung betrifft ein Verfahren zur Ermittlung der voraussichtlichen Fahrzeit bzw. Ankunftszeit bei der Routcncrmittlung auf einer digitalen Straßenkarte, anhand einer Geschwindigkeitabelle sowie anhand von gemessenen Nutzergeschwindigkeiten. Die Erfindung betrifft ferner ein zugehöriges Computerprogrammprodukt sowie ein digitales Speichermedium und eine entsprechende Navigationseinrichtung.

Die Erfindung zeichnet sich dadurch aus, dass die Geschwindigkeitstabcllc für zumindest eine, vorzugsweise für jede, Straßcnkatcgoric (B) in Zeitklassen (k, 1, m, n) unterteilt ist, wobei einer Zeitklasse jeweils eigene Durchschnittsgeschwindigkeiten in Abhängigkeit des Wochentags und/oder der Tageszeit (A) zugeordnet sind.

Mit der Erfindung lässt sich das nutzerspezifische Fahrverhalten bei der Ermittlung der voraussichtlichen Fahrzeit durch eine Navigationseinrichtung automatisch berücksichtigen, und die voraussichtliche Ankunftszeit des Nutzers lässt sich in Abhängigkeit diverser, insbesondere zeitlicher und/oder geographischer Straßenattribute mit bei zunehmender Nutzung immer weiter zunehmender Genauigkeit ermitteln. Dabei lassen sich insbesondere tages- bzw. uhrzeitbezogene Geschwindigkeitsunterschiede bei der Ermittlung der voraussichtlichen Ankunftszeiten berücksichtigen.

EP 2 224 212 A1

Figur 1

**Beschreibung**

Die Erfindung betrifft ein Verfahren zur Ermittlung der voraussichtlichen Fahrzeit bzw. Ankunftszeit bei der Routenermittlung auf einer digitalen Straßenkarte nach dem Oberbegriff von Patentanspruch 1. Die Erfindung betrifft ferner ein zugehöriges Computerprogrammprodukt sowie ein digitales Speichermedium und eine Navigationseinrichtung.

Gattungsgemäße Verfahren und Navigationseinrichtungen zur Ermittlung der voraussichtlichen Fahrzeit bzw. Ankunftszeit sind aus dem Stand der Technik bekannt. In aus dem Stand der Technik bekannten elektronischen Straßenkarten ist üblicherweise für jede Straße bzw. für jedes Straßenelement unter anderem eine bestimmte Klassifizierung von Durchschnittsgeschwindigkeit und Art (Wichtigkeit) der Straße gespeichert, die wiederum zur Errechnung der Ankunftszeit relevant ist.

Bekannte Navigationseinrichtungen berechnen die Ankunftszeit zumeist aus der vom Kartenhersteller errechneten und bereitgestellten Durchschnittsgeschwindigkeit pro Straßensegment. Die dabei zugrundeliegenden Durchschnittswerte werden von einem Fahrer oder im besten Fall von mehreren wenigen Fahrern, den Felderfassern, bestimmt. Diese fahren naturgemäß beruflich sehr viel und weisen somit ein anderes Fahrverhalten auf als zum Beispiel Normalnutzer oder Wenigfahrer. Dies führt zu Fehlern, da unterschiedliche Fahrer jeweils verschiedenes Fahrverhalten haben und somit auch die Ankunftszeit unterschiedlich ausfällt. Es ist ferner beispielsweise auch ein Unterscheid zwischen einzelnen Regionen, wie Ballungszentren und ländlichem Gebiet, zu erkennen, was durch das bestehende Verfahren nicht abgebildet werden kann.

Ein weiterer Nachteil derartiger aus dem Stand der Technik bekannter Ansätze besteht ferner in der dortigen lediglich statischen Berechnung der Ankunftszeit aufgrund der vom Kartenhersteller angenommenen Durchschnittsgeschwindigkeiten. Es erfolgt somit keine Anpassung der Ankunftszeitberechnung an den jeweiligen Nutzer eines Navigationssystems, insbesondere auch nicht in Abhängigkeit davon, ob ein solcher Nutzer am Tag oder in der Nacht fährt, in normaler Geschwindigkeit oder während der Rush-Hour. Auch wenn ein Nutzer an bestimmten Tagen langsamer fährt, wird ein Navigationsverfahren oder Navigationsgerät gemäß diesem bekannten Stand der Technik nicht entsprechend darauf reagieren.

Aus der EP 1 172 631 ist ein Verfahren bekannt, bei dem für den Nutzer individuell pro Straßenkategorie Durchschnittsgeschwindigkeiten erfasst werden, die dann bei der Fahrtroutenberechnung herangezogen werden.

Bei dem Verfahren gemäß dieser Druckschrift werden Nutzerdaten jedoch lediglich straßenkategorienbasiert erhoben. Etwaige Unterschiede, beispielsweise in Bezug auf tages- bzw. uhrzeitabhängige Geschwindigkeitsabweichungen, werden nicht berücksichtigt, was wieder zu Ungenauigkeiten bei der Ankunftszeitberechnung führt.

Ferner wird gemäß dieser bekannten Lehre in den zugrundeliegenden Straßenkarten auch keine Unterscheidung zwischen gleichen Geschwindigkeitsklassen auf verschiedenen Straßenkategorien vorgenommen. Es wird also nicht berücksichtigt, dass auf Autobahnen mit einer bestimmten Geschwindigkeitsklasse eine möglicherweise höhere Durchschnittsgeschwindigkeit gefahren wird als auf einer Landstraße mit der gleichen Geschwindigkeitsklasse. Ebensowenig wird dort auch beispielsweise der unterschiedliche Ausbauzustand (einspurig, mehrspurig, innerstädtisch, außerstädtisch usw.) innerhalb einer Straßenkategorie, beispielsweise innerhalb der Straßenkategorie "Bundesstraße", unterschieden.

Mit diesem Hintergrund ist es somit Aufgabe der vorliegenden Erfindung, ein Verfahren bzw. eine Vorrichtung zur Ermittlung der voraussichtlichen Fahrzeit bzw. Ankunftszeit zu schaffen, mit dem bzw. mit der die im Stand der Technik vorzufindenden Nachteile überwunden werden können. Insbesondere soll die Erfindung bei der Ermittlung der voraussichtlichen Fahrzeit bzw. Ankunftszeit das nutzerspezifische Fahrverhalten und die sich immer wieder verändernden Gegebenheiten, wie Stadtfahrten oder Überlandfahrten, selbsttätig berücksichtigen und damit die jeweilige Ankunftszeit des einzelnen Nutzers spezifisch mit immer weiter zunehmender Genauigkeit ermitteln können. Dabei sollen durch das Navigationsverfahren bzw. die Navigationseinrichtung insbesondere auch tages- bzw. uhrzeitbezogene Unterschiede wie auch weitere Straßensegmentattribute in Bezug auf die ermittelten, voraussichtlichen Durchschnittsgeschwindigkeiten berücksichtigt werden können.

Diese Aufgabe wird durch ein Verfahren gemäß Patentanspruch 1 gelöst. Die erfindungsgemäße Lösung der Aufgabe umfasst ferner ein Computerprogrammprodukt gemäß Patentanspruch 22, ein digitales, computerlesbares Speichermedium nach Patentanspruch 23 sowie eine Navigationseinrichtung gemäß Patentanspruch 24.

Bevorzugte Ausführungsformen der Erfindung sind Gegenstand der Unteransprüche.

Das Verfahren zur Ermittlung der voraussichtlichen Fahrzeit bzw. Ankunftszeit auf einer digitalen Straßenkarte gemäß der vorliegenden Erfindung wird - in für sich genommen zunächst bekannter Weise - mittels einer Navigationseinrichtung mit einer Positionsermittlungseinheit, einer Geschwindigkeitsermittlungseinheit, einer Prozessoreinheit, einer Massenspeichereinheit und einer Ein-/Ausgabeeinrichtung durchgeführt. Insbesondere Positionsermittlungseinheit und Geschwindigkeitsermittlungseinheit können dabei beispielsweise in Form eines integrierten GPS-Sensors verwirklicht sein.

Dabei ist das Wegenetz der digitalen Straßenkarte in Streckenabschnitte eingeteilt, und es sind jedem Strek-

kenabschnitt zumindest eine Straßenkategorie und jeder Straßenkategorie in einer Geschwindigkeitstabelle eine zugehörige Durchschnittsgeschwindigkeit zugeordnet. Ferner wird die voraussichtliche Fahrtdauer einer Strecke oder Route aus den Längen und den Durchschnittsgeschwindigkeiten der Streckenabschnitte der Route berechnet, wobei zudem von der Geschwindigkeitsermittlungseinheit gemessene Nutzergeschwindigkeiten in die Geschwindigkeitstabelle aufgenommen werden können.

Erfindungsgemäß zeichnet sich das Verfahren jedoch dadurch aus, dass die Geschwindigkeitstabelle für zumindest eine, vorzugsweise für jede, Straßenkategorie der Straßenkarte in Zeitklassen unterteilt ist, wobei einer Zeitklasse jeweils eigene, ggf. unterschiedliche, Durchschnittsgeschwindigkeiten in Abhängigkeit des Wochentags und/oder der Tageszeit zugeordnet sind.

Der Begriff "Straßenkategorie" kann dabei für unterschiedliche hierarchische bzw. funktionelle Attribute und dementsprechende Einordnungen der in der Straßenkarte enthaltenen Straßensegmente in Straßensegmentklassen stehen, also zunächst einmal beispielsweise für unterschiedliche Straßenkategorien, wie Autobahnen, Bundesstraßen, Landstraßen usw.

Im Kontext der Erfindung soll der Begriff "Straßenkategorie" jedoch weit gefasst verstanden werden. Insbesondere soll der der Begriff "Straßenkategorie" im Kontext der Erfindung prinzipiell für beliebige Attribute oder Attributskombinationen stehen, die einer Klasse von Straßensegmenten zugeordnet werden können, durch welche also eine bestimmte, gemeinsame Eigenschaften aufweisende Menge an Straßensegmenten in der Straßenkarte charakterisiert und von anderen Mengen an Straßensegmenten mit anderen Eigenschaften unterschieden werden kann.

So könnte eine Straßenkategorie beispielsweise auch durch eine Parameterkombination aus einer hierarchischen bzw. funktionellen Einordnung von Straßensegmenten und einer Geschwindigkeitsklasse der betreffenden Straßensegmente gebildet sein. Beispielsweise könnte im Kontext der Erfindung eine bestimmte Straßenkategorie alle Autobahn-Straßensegmente der Straßenkarte umfassen, die gleichzeitig auch ein Baustellenattribut und damit eine bestimmte Geschwindigkeitsklasse aufweisen.

Mit anderen Worten, der Begriff "Straßenkategorie" soll im Kontext der Erfindung für jedes mögliche, Mengen von Straßensegmenten unterscheidende Straßensegmentattribut und ebenso für jede Kombination derartiger unterscheidender Attribute stehen können, durch das bzw. durch die sich die in der Straßenkarte enthaltenen Straßensegmente charakterisieren und somit in Mengen von Straßensegmenten bzw. Straßensegmentklassen einteilen lassen. Außer der Einordnung als Autobahn, Bundesstraße, Landstraße usw., der Einordnung in unterschiedliche Geschwindigkeitsklassen, der Zuordnung von Baustellenattributen usw. kann der Begriff "Straßenkategorie" im Kontext der Erfindung dabei beispielsweise auch für einen sog. "Name Route Type" stehen, welcher die Benennung von Straßensegmenten nach nummerierten Elementen berücksichtigt, wie auch für eine Kombination dieser oder weiterer funktioneller oder hierarchischer Attribute, die den Straßenelementen zugeordnet werden können.

Dank der Erfindung können somit einerseits jeder Straßenkategorie (bzw. allgemein jeder sinnvollen Kombination von möglichen Straßensegmentattributen) in Form der unterschiedlichen Zeitklassen bereits werksseitig bestimmte, zeitabhängige Durchschnittsgeschwindigkeiten zugeordnet werden, die insbesondere in Abhängigkeit des jeweiligen Wochentags und/oder der jeweiligen Tageszeit unterschiedliche Werte annehmen können. Hierbei kann somit berücksichtigt werden, dass die zu erwartenden Durchschnittsgeschwindigkeiten beim Befahren der entsprechenden Streckenabschnitte bzw. Straßensegmente der Straßenkarte nicht nur von der jeweiligen Straßenkategorie abhängen, sondern insbesondere auch von den unterschiedlichen Wochentagen und/oder Tageszeiten und den dabei beispielsweise zu erwartenden Verkehrsbedingungen.

Im Ergebnis können dank der Erfindung insbesondere die an unterschiedlichen Wochentagen (beispielsweise Werktagen im Gegensatz zu Wochenenden) oder zu unterschiedlichen Uhrzeiten (beispielsweise Berufsverkehr im Gegensatz zum Freizeitverkehr) zu erwartenden unterschiedlichen Durchschnittsgeschwindigkeiten in der der Ankunftszeitberechnung zugrundeliegenden Geschwindigkeitstabelle berücksichtigt werden.

Hierbei ist zudem vorteilhaft, dass die ebenfalls gemessenen und in die Geschwindigkeitstabelle aufnehmbaren Nutzergeschwindigkeiten auch bereits zur Laufzeit der Navigation verwendet und ausgewertet werden können. Die Nutzergeschwindigkeiten müssen also nicht eigens zentral gesammelt werden, sondern werden direkt auf dem Navigationsgerät ermittelt, berücksichtigt und abgespeichert. Die Fahrweise jedes einzelnen Nutzers kann somit dynamisch bei der jeweiligen Ermittlung der voraussichtlichen Fahrzeit berücksichtigt werden.

Dabei ist die Geschwindigkeitstabelle vorzugsweise für zumindest eine, bevorzugt für jede, Straßenkategorie zudem in verschiedene Geschwindigkeitsklassen unterteilt, wobei einer Geschwindigkeitsklasse innerhalb einer Straßenkategorie jeweils eigene, ggf. unterschiedliche, Durchschnittsgeschwindigkeiten zugeordnet werden können. Auf diese Weise lassen sich auch innerhalb einer Straßenkategorie zudem (in Abhängigkeit weiterer Attribute wie beispielsweise Ausbauzustand, Baustellen, Geschwindigkeitsbeschränkungen usw.) Unterteilungen in verschiedene Geschwindigkeitsklassen vornehmen, in denen jeweils unterschiedliche Durchschnittsgeschwindigkeiten des Nutzers eines Navigationssystems zu erwarten sind und dementsprechend in die Geschwindigkeitstabelle eingetragen werden können. Hierdurch können z.B. Bundesstraßen unterschiedlich behandelt werden in Abhängigkeit beispielsweise davon, ob sie innerstädtisch oder über Land verlaufen, ob sie ein- bzw. mehrspurig ausgebaut sind etc..

Vorzugsweise sind dabei unterschiedlichen Straßenkategorien (z.B. Autobahn, Bundesstraße, Landstraße) mit jeweils gleicher Geschwindigkeitsklasse jeweils eigene, ggf. unterschiedliche, Durchschnittsgeschwindigkeiten zugeordnet. Auf diese Weise lässt sich berücksichtigen, dass beispielsweise auf einer Bundesstraße mit einem bestimmten Attribut (beispielsweise Ausbauzustand, Baustelle, Geschwindigkeitsbeschränkung usw.) und damit möglicherweise formal derselben Geschwindigkeitsklasse wie einer Autobahn mit denselben Attributen dennoch eine andere (beispielsweise niedrigere) Durchschnittsgeschwindigkeit zu erwarten sein wird als auf der entsprechenden Autobahn.

Hierbei ist festzuhalten, dass zusätzliche Attribute für Straßenkategorien bzw. Straßenelementklassen, wie beispielsweise ein Baustellenattribut oder eine Geschwindigkeitsklasse, wie bereits weiter oben ausgeführt, alternativ auch bereits Bestandteil der Straßenkategorie selbst gemäß der Definition dieses Begriffs im Kontext der Erfindung sein können. Mit anderen Worten, der Begriff "Straßenkategorie" ist im Kontext der Erfindung nicht auf die Einteilung der in der Straßenkarte enthaltenen Straßenelemente in Straßenelementklassen, wie Autobahnen, Bundesstraßen, Landstraßen usw., beschränkt, sondern kann beispielsweise auch für Klassen von Straßenelementen mit einer gemeinsamen Geschwindigkeitsklasse, mit demselben Baustellenattribut oder mit jedem anderen möglichen Straßenklassenattribut stehen, wie auch für beliebige Kombinationen derartiger Straßenklassenattribute. Insbesondere kann eine Ausführungsform der Erfindung auch vorsehen, dass eine bestimmte Straßenkategorie bereits sowohl durch eine bestimmte Straßenelementklasse als auch durch eine bestimmte Geschwindigkeitsklasse definiert ist.

Eine weitere bevorzugte Ausführungsform der Erfindung sieht vor, dass die Geschwindigkeitabelle für zumindest eine, vorzugsweise für jede, Straßenkategorie in Geographieklassen oder Demographieklassen unterteilt ist, wobei einer Geographieklasse oder Demographieklasse jeweils eigene, ggf. unterschiedliche, Durchschnittsgeschwindigkeiten in Abhängigkeit eines geographischen oder demographischen Regionsmerkmals zugeordnet sind. Bei derartigen geographischen oder demographischen Regionsmerkmalen kann es sich insbesondere um die Angabe handeln, ob am betrachteten Ort eine dörfliche oder eine städtische Regionsstruktur vorliegt, welche Gemeindegrößen oder Demographiestrukturen vorherrschen oder in welchem Land, Bundesland bzw. welchem Staat die betrachtete Region liegt.

Auf diese Weise lässt sich die Ankunftszeitberechnung noch exakter durchführen, indem unterschiedliche zu erwartende Durchschnittsgeschwindigkeiten auch in Abhängigkeit derartiger geographischer oder demographischer Regionsmerkmale spezifisch berücksichtigt werden können.

Gemäß einer weiteren bevorzugten Ausführungsform der Erfindung ist vorgesehen, dass die Geschwindigkeitabelle für zumindest eine, vorzugsweise jede, Straßenkategorie in Fahrzeugklassen unterteilt ist, wobei einer Fahrzeugklasse jeweils eigene, ggf. unterschiedliche, Durchschnittsgeschwindigkeiten in Abhängigkeit eines Fahrzeugtyps (beispielsweise Pkw, Motorrad, Lkw, Fahrrad, Fußgänger, usw.) zugeordnet sind. Auf diese Weise lassen sich auch die je nach Fortbewegungsmittel bzw. Fahrzeugtyp unterschiedlichen zu erwartenden Durchschnittsgeschwindigkeiten berücksichtigen, dies insbesondere auch spezifisch unterschiedlich für jede Straßenkategorie. So wird beispielsweise die zu erwartende Durchschnittsgeschwindigkeit eines Motorrads auf der Landstraße möglicherweise höher sein als die eines Pkw, während dieselbe Relation auf der Autobahn umgekehrt angenommen werden kann.

Eine weitere bevorzugte Ausführungsform der Erfindung sieht vor, dass die Geschwindigkeitabelle für zumindest eine, vorzugsweise für jede, Straßenkategorie in Fahrertypklassen unterteilt ist, wobei einer Fahrertypklasse jeweils eigene, ggf. unterschiedliche, Durchschnittsgeschwindigkeiten in Abhängigkeit eines Fahrertyps (beispielsweise Alter, Geschlecht, Beruf, usw.) zugeordnet sind. Auf diese Weise lassen sich auch die je nach Fahrertyp unterschiedlichen zu erwartenden Durchschnittsgeschwindigkeiten berücksichtigen, dies dabei insbesondere auch spezifisch unterschiedlich für jede Straßenkategorie.

Eine weitere bevorzugte Ausführungsform der Erfindung sieht vor, dass in einer Geschwindigkeitabelle (beispielsweise ab Werk) Standardwerte für die enthaltenen Durchschnittsgeschwindigkeiten gespeichert sind. Dabei bleiben die Standardwerte für die Durchschnittgeschwindigkeiten so lange für die Berechnung der voraussichtlichen Ankunftszeit gültig, bis von der Navigationseinrichtung eine vorgebbare Anzahl an gemessenen Nutzergeschwindigkeiten für die jeweilige Attributskombination bzw. Klasse (z.B. Straßenelementklasse, Zeitklasse, Fahrzeugklasse usw.) erfasst wurde. Dies bedeutet, dass tatsächlich gemessene Nutzergeschwindigkeiten erst dann in die entsprechenden Felder der Geschwindigkeitabelle aufgenommen und somit bei der Berechnung der Ankunftzeit berücksichtigt werden, wenn eine zuverlässige Datenbasis in Form einer definierbaren Mindestanzahl an Messungen durch die Navigationseinrichtung für die entsprechenden Felder der Geschwindigkeitabelle vorliegt.

Gemäß einer weiteren bevorzugten Ausführungsform der Erfindung erfolgt die Aufnahme der gemessenen Nutzergeschwindigkeiten in eine Geschwindigkeitabelle dergestalt, dass gemessene Nutzergeschwindigkeiten jeweils mit einer Gewichtung versehen und mit einer in der Geschwindigkeitabelle im entsprechenden Feld zuvor enthaltenen Durchschnittsgeschwindigkeit zu einer neuen Durchschnittsgeschwindigkeit verrechnet werden. Hierbei kann beispielsweise der neu gemessenen und in die Geschwindigkeitabelle aufzunehmenden Nutzergeschwindigkeit eine geringere (ggf. sehr viel geringere) Gewichtung als der zuvor in der Geschwindigkeitabelle an der entsprechenden Stelle enthaltenen Durchschnittsgeschwindigkeit zugewiesen werden. Auf diese Weise erfolgt somit eine lediglich allmähliche Veränderung der in der Tabelle jeweils bereits enthaltenen Durchschnittsgeschwindigkeiten anhand der neuen gemessenen Nutzergeschwindigkeiten, wodurch insbesondere die Wirkung von Ausreißerwerten abgedämpft wird.

Vorzugsweise wird die neue Durchschnittsgeschwindigkeit dabei anhand der Bildung eines gleitenden Durchschnitts mehrerer Geschwindigkeitswerte ermittelt. Gleitende Durchschnitte verringern die in einer Datenreihe vorhandene Variation und führen daher zu einer (einstellbaren) Glättung der ermittelten Geschwindigkeitswerte, was ebenfalls zu einer besseren Stabilisierung und gleichmäßigeren Anpassung der in der Geschwindigkeitstabelle enthaltenen Durchschnittsgeschwindigkeiten an die gemessenen Nutzergeschwindigkeiten führt.

Ebenso im Dienst der Stabilisierung der in der Geschwindigkeitstabelle enthaltenen Durchschnittsgeschwindigkeiten sowie im Sinne einer erhöhten Plausibilität und Zuverlässigkeit dieser Durchschnittgeschwindigkeiten steht eine weitere Ausführungsform der Erfindung, die sich dadurch auszeichnet, dass gemessene Nutzergeschwindigkeiten, welche außerhalb eines vorgebbaren, insbesondere straßenkategorieabhängig (oder generell klassenabhängig) definierbaren Extremwert-Intervalls liegen, bei der Bildung einer neuen Durchschnittsgeschwindigkeit für die Geschwindigkeitstabelle ignoriert werden. Auf diese Weise wird die Wirkung unplausibler oder fehlerhafter Messwerte oder die Wirkung von Ausreißerwerten ebenfalls abgedämpft.

Gemäß einer weiteren bevorzugten Ausführungsform der Erfindung erstreckt sich die in der Geschwindigkeitstabelle für zumindest eine, vorzugsweise für jede, Straßenkategorie gebildete Zeitklasse über mehrere in der Zeitklasse enthaltene Zeitabschnitte. Bei den Zeitabschnitten kann es sich beispielsweise jeweils um Stundenzeiträume handeln, in welchem Fall eine Zeitklasse also insbesondere jeweils einen Zeitraum von mehreren Stunden umfassen kann. Zusätzlich oder alternativ können auch Zeitklassen über Wochentage gebildet werden. Eine Zeitklasse kann dabei insbesondere auch nicht benachbarte Zeitabschnitte umfassen.

Vorzugsweise decken dabei unterschiedliche Zeitklassen - insbesondere in Abhängigkeit des Wochentags oder der Tageszeit - jeweils unterschiedlich lange Zeiträume ab. Hierdurch lässt sich berücksichtigen, dass bestimmte Verkehrsituationen (wie beispielsweise die Rush Hour) spezifisch zu bestimmten Tageszeiten auftreten und eine vergleichsweise kurze Dauer besitzen, während andere Verkehrsituationen (wie beispielsweise Freizeit- oder Reiseverkehr) spezifisch zu anderen Tageszeiten oder an anderen Wochentagen auftreten und eine beispielsweise längere Zeitdauer aufweisen können.

Besonders bevorzugt wird dabei über diejenigen Zeitabschnitte der Zeitklasse, für welche eine bestimmte, festlegbare Anzahl an gemessenen Nutzergeschwindigkeiten noch nicht überschritten ist, ein Mittelwert der in dieser Zeitklasse enthaltenen Durchschnittsgeschwindigkeiten gebildet und dieser Durchschnitt innerhalb der betreffenden Zeitklasse zur Ermittlung der voraussichtlichen Ankunftszeit herangezogen. Ebenso wird vorzugsweise für diejenigen Zeitabschnitte einer Zeitklasse, für welche eine bestimmte Anzahl an gemessenen Nutzergeschwindigkeiten bereits überschritten ist, die für diesen Zeitabschnitt gespeicherte Durchschnittsgeschwindigkeit individuell berücksichtigt und innerhalb der betroffenen Zeitabschnitte der Ermittlung der voraussichtlichen Ankunftszeit zugrundegelegt.

Somit kann zunächst einmal innerhalb einer Zeitklasse ein Mittelwert der in den einzelnen Zeitabschnitten der Zeitklasse enthaltenen Nutzergeschwindigkeiten so lange berücksichtigt werden, bis zumindest in einzelnen Zeitabschnitten der Zeitklasse eine definierbare Mindestanzahl an gemessenen Nutzergeschwindigkeiten überschritten ist. Sodann kann in denjenigen Zeitabschnitten, in denen die definierbare Mindestanzahl an gemessenen Geschwindigkeiten überschritten ist, eine individuelle Berücksichtigung dieser Nutzergeschwindigkeiten erfolgen, während der Rest der Zeitklasse nach wie vor anhand eines (beispielsweise herstellerseitig vorgebbaren) Mittelwerts Berücksichtigung findet.

Eine weitere bevorzugte Ausführungsform der Erfindung sieht vor, dass eine Endkontrolle durchgeführt wird, indem nach dem Durchfahren einer Route die tatsächliche Gesamtzeit vom Start bis zum Ziel der zugehörigen Routenplanung ermittelt wird. Anschließend kann anhand eines Abgleichs der tatsächlichen Gesamtzeit mit der anhand der Geschwindigkeitstabelle ermittelten Gesamtzeit ein Abgleich und ggf. eine entsprechende Korrektur der in der Geschwindigkeitstabelle enthaltenen, betroffenen Durchschnittsgeschwindigkeiten erfolgen.

Gemäß einer weiteren bevorzugten Ausführungsform der Erfindung wird eine in der Navigationseinrichtung gespeicherte oder von der Navigationseinrichtung zumindest teilweise erstellte Geschwindigkeitstabelle auf einen zentralen Server übertragen. Vorzugsweise werden dabei aus den von unterschiedlichen Navigationseinrichtungen auf den Server übertragenen Geschwindigkeitstabellen übergreifende Geschwindigkeitsprofile als mögliche zukünftige Werkseinstellungen für Navigationseinrichtungen gebildet.

Gemäß einer weiteren Ausführungsform wird ein dergestalt aus den Geschwindigkeitstabellen unterschiedlicher Navigationseinrichtungen oder verschiedener Nutzer gebildetes Geschwindigkeitsprofil vom Server auf eine Navigationseinrichtung übertragen.

Anhand dieser Ausführungsformen kann somit eine permanente Verbesserung der werksseitig oder serverseitig gespeicherten Geschwindigkeitsprofile anhand der Berücksichtigung der von zahlreichen Nutzern oder Navigationseinrichtungen auf den Server übertragenen Geschwindigkeitstabellen erfolgen, und die dergestalt verbesserten Geschwindigkeitsprofile können sodann ggf. zurück auf die Navigationseinrichtungen zahlreicher Nutzer übertragen und dort zur Verbesserung der Genauigkeit der Ankunftszeitvorhersage genutzt werden.

Gemäß einer weiteren Ausführungsform der Erfindung kann bei der Übertragung eines serverseitigen Geschwindigkeitsprofils auf eine Navigationseinrichtung eines Nutzers berücksichtigt werden, dass in der Geschwindigkeitstabelle der Navigationseinrichtung enthaltene Durchschnittsgeschwindigkeiten nur dann mit serverseitig bereitgestellten Werten überschrieben werden, wenn für die betreffenden Straßenkategorien, Zeitklassen, Fahrzeugklassen usw. weniger als eine vorgebbare Anzahl an bereits gesammelten Geschwindigkeiten des betreffenden Nutzers vorliegen.

Die Trennung zwischen serverseitig bzw. werksseitig bereitgestellten Durchschnittsgeschwindigkeiten und nutzerseitig ermittelten Durchschnittsgeschwindigkeiten erfolgt gemäß einer weiteren bevorzugten Ausführungsform der Erfindung dadurch, dass in der Navigationseinrichtung zumindest zwei Geschwindigkeitstabellen gespeichert sind. Dabei enthält eine erste Geschwindigkeitstabelle die serverseitig bereitgestellten bzw. werksseitig vordefinierten Geschwindigkeitsdaten, und eine weitere Geschwindigkeitstabelle enthält die nutzerseitig gesammelten Geschwindigkeitsdaten. Auf die erste Geschwindigkeitstabelle wird dabei dann und so lange zugegriffen, wie in den entsprechenden Feldern der weiteren Geschwindigkeitstabelle weniger als eine vorgebbare Anzahl an gesammelten Nutzergeschwindigkeiten vorliegen. Im anderen Fall, sobald also eine genügende Anzahl an gesammelten Nutzergeschwindigkeiten vorliegt, wird sodann auf die weitere Geschwindigkeitstabelle zugegriffen, in welcher die nutzerseitigen Durchschnittsgeschwindigkeiten gespeichert sind.

Die Erfindung betrifft ferner ein dem erfindungsgemäßen Verfahren zugeordnetes Computerprogrammprodukt, ein zugehöriges digitales Speichermedium sowie eine ebenfalls erfindungsgemäße Navigationseinrichtung. Dabei umfasst das erfindungsgemäße Computerprogrammprodukt auf einem maschinenlesbaren Träger gespeicherte Programmschritte zur Durchführung des oben beschriebenen erfindungsgemäßen Verfahrens, wenn diese von einer programmierbaren Prozessoreinheit ausgeführt werden. Das digitale Speichermedium gemäß der Erfindung enthält elektronisch auslesbare Steuersignale, die nach dem Auslesen durch eine programmierbare Prozessoreinheit dergestalt mit der Prozessoreinheit interagieren können, dass durch die Prozessoreinheit das beschriebene, erfindungsgemäße Verfahren ausgeführt wird.

Die erfindungsgemäße Navigationseinrichtung schließlich dient zur Ermittlung der voraussichtlichen Fahrzeit bzw. Ankunftszeit bei der Routenermittlung auf einer digitalen Straßenkarte und umfasst eine Positionsermittlungseinheit, eine Geschwindigkeitsermittlungseinheit, eine Prozessoreinheit, eine Massenspeichereinheit und eine Ein-/ Ausgabeeinrichtung. Die digitale Straßenkarte umfasst dabei ein in Streckenabschnitte eingeteiltes Wegenetz, bei dem jedem Streckenabschnitt zumindest eine zugehörige Straßenkategorie und jeder Straßenkategorie in einer Geschwindigkeitstabelle eine Durchschnittsgeschwindigkeit zugeordnet ist. Dabei kann die voraussichtliche Fahrtdauer einer Route aus den Längen und den Durchschnittsgeschwindigkeiten der Streckenabschnitte der Route berechnet werden, wobei zudem gemessene Nutzergeschwindigkeiten in die Geschwindigkeitstabelle aufnehmbar sind. Die Prozessoreinheit der Navigationseinrichtung ist dabei zur Ausführung des oben beschriebenen Computerprogrammprodukts, zum Auslesen des genannten digitalen Speichermediums oder zur Durchführung des oben beschriebenen erfindungsgemäßen Verfahrens eingerichtet.

Im Folgenden wird die Erfindung anhand lediglich Ausführungsbeispiele darstellender Zeichnungen näher erläutert.

Dabei zeigt

**Fig. 1** einen Ausschnitt aus einer Geschwindigkeitstabelle ge- mäß einer Ausführungsform des erfindungsgemäßen Ver- fahrens;

**Fig. 2** einen Ausschnitt aus einer Bildschirmdarstellung einer Navigationseinrichtung während des morgendlichen Be- rufsverkehrs; und

**Fig. 3** in einer **Fig. 2** entsprechenden Darstellung den entspre- chenden Ausschnitt aus der Bildschirmdarstellung gemäß **Fig. 2** während einer nächtlichen Fahrt.

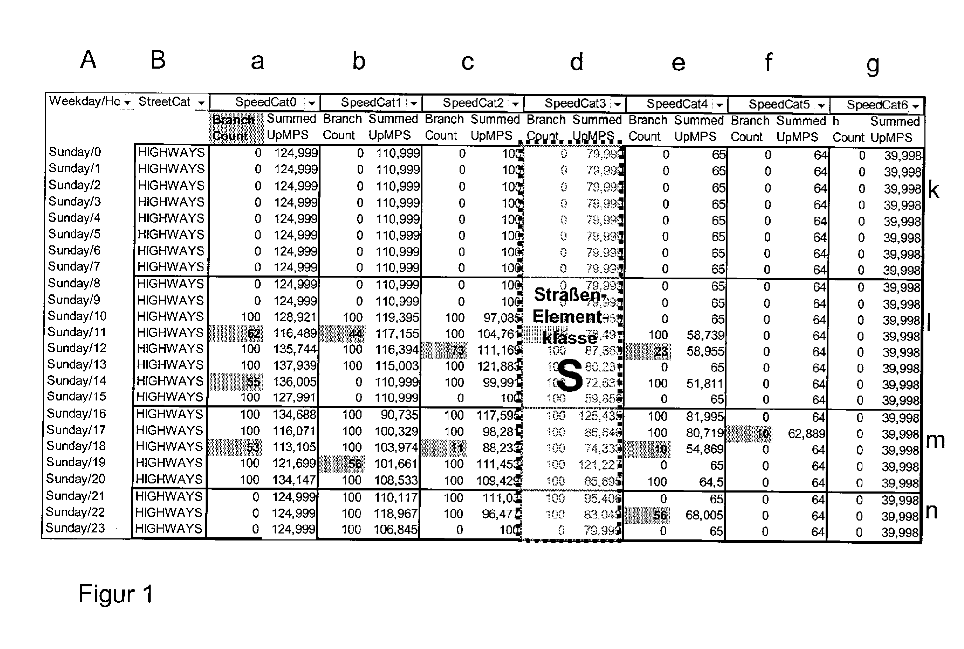

**Fig. 1** zeigt einen Ausschnitt aus einer in einer erfindungsgemäßen Navigationseinsrichtung gespeicherten Geschwindigkeitstabelle.

Darin ist als Beispiel der Sonntag in Spalte A, mit der Straßenkategorie "Highway" in Spalte B, dargestellt. Dies bedeutet, die Geschwindigkeitstabelle der Navigationseinrichtung umfasst zumindest für jeden Tag A und für jede Straßenkategorie B einen dem dargestellten entsprechenden Tabellenbereich.

Horizontal sind ferner unterschiedliche Geschwindigkeitsklassen a bis g aufgetragen, so dass in den Wertefeldern der Tabelle in den Spalten a bis g jeweils Geschwindigkeits-Durchschnittswerte sowie jeweils die zugehörige Anzahl der von der Navigationseinrichtung bereits gemessenen Nutzerwerte zu finden sind.

Zur Aufnahme von Nutzergeschwindigkeiten in die Geschwindigkeitstabelle werden bei der Bewegung des Fahrzeugs auf einer Fahrstrecke - wobei nicht notwendigerweise eine aktive Routenplanung vorliegen muss - nach vorgebbaren Intervallen Messungen der aktuellen Geschwindigkeit durchgeführt. Hierzu werden jeweils die in der Straßenkarte vorhandenen Straßenelemente verarbeitet, indem mittels der Positionsermittlungseinheit per Map-Matching das aktuelle Straßenelement aus der Kartendatenbank ausgelesen und unter Berücksichtigung von bestimmten Attributen (hier Straßenkategorie B und Geschwindigkeitsklasse a, b, c, d, e, f, g) die passende Straßenelementklasse (beispielsweise Straßenelementklasse S) ermittelt wird. Zusätzlich werden aktueller Tag und aktuelle Uhrzeit z.B. per GPS ermittelt, anhand dessen die passende Zeitklasse k, l, m, n und der passende Zeitabschnitt (Uhrzeit) identifiziert, und die jeweils ermittelte Nutzergeschwindigkeiten werden in die entsprechenden Tabellenfelder (bei "SummedUpMPS") aufgenommen.

Um die Qualität der gesammelten Daten zu erhöhen und um Fehler in der Positionserkennung (z.B. per GPS) auszugleichen, kann dabei eine Plausibilitätskontrolle durchgeführt werden, indem ermittelte Durchschnittsgeschwindigkeiten kleiner eines Minimalwertes (z.B. 10 km/h) sowie größer eines Maximalwertes (z.B. 250 km/h) nicht für die Datenerfassung verwendet werden. Für etwa ebenfalls vorhandene Geschwindigkeitsprofile und zugehörige Geschwindigkeitstabellen wie "Fahrrad" oder "Fußgänger" können dabei insbesondere jeweils andere Grenzwerte definiert sein, um nicht durch dann versehentliches Verwenden des Profils "Kraftfahrzeug" die zugehörige Datenbank zu verfälschen.

Durch möglicherweise unterschiedliches Fahrverhalten in unterschiedlichen Ländern kann es weiterhin vorteilhaft sein, auch eine Unterscheidung in einzelne Länder vorzunehmen sowie auf regionale Gegebenheiten zu reagieren und dies jeweils gesondert zu behandeln und in gesonderten Tabellen abzuspeichern.

Ferner lassen sich in der Praxis auch Unterscheidungen zwischen großen und kleineren Städten erkennen. So ergibt sich beispielsweise, dass der Verkehrsfluss in Mailand im Vergleich zu Würzburg um ca. 15 km/h verlangsamt ist. Dies lässt sich anhand bestimmter Straßenelementattribute, anhand der Geschwindigkeiten und anhand der Straßenkarte erkennen und bei der Datensammlung entsprechend berücksichtigen.

Insbesondere können ermittelte Geschwindigkeitsprofile hierzu auf einem zentralen Server gesammelt werden und durch übliche Klassifikationsverfahren in eine beliebige Anzahl von Klassen unterteilt werden. Diese Klassen können dann die Grundlage für die zukünftigen Werkseinstellungen bilden und hierzu beispielsweise auf drahtlosem oder drahtgebundenem Weg auf nutzerseitige Navigationssysteme aufgespielt werden. Zum Beispiel kann eine derartige zentrale Sammlung ermittelter Geschwindigkeitsprofile ergeben, dass Fahrer aus England im Durchschnitt 10 km/h langsamer fahren als Fahrer aus Deutschland. Demzufolge würde das ausgelieferte Standardprofil für Geräte in England auf um 10 km/h reduzierten Durchschnittsgeschwindigkeiten basieren.

Wird eine derartige Geschwindigkeitstabelle von einem zentralseitigen Server heruntergeladen, so ist zu entscheiden, ob alle vom Nutzer selbst gesammelten Werte hiermit überschrieben werden sollen oder ob eigene Messungen beibehalten werden. Letztere Variante ist für intensive Benutzer vorteilhaft. Aus diesem Grund wird in der Geschwindigkeitstabelle gemäß Fig. 1 für jeden Eintrag im Feld "Branch Count" unterschieden, ob bereits eine vorgebbare Anzahl an Messungen durch den Nutzer vorliegt oder nicht. In letzterem Fall werden die aktualisierten Werte aus der zentralseitig zur Verfügung gestellten Geschwindigkeitstabelle übernommen, während im ersteren Fall die nutzerseitig gesammelten Werte beibehalten werden.

Ferner wird im Sinne einer Plausibilitätsprüfung auch eine Endkontrolle der Fahrten und somit aller gesammelten Daten durchgeführt, indem die Zeit der Fahrt von Start bis Ziel erfasst und mit den gesammelten Daten verglichen wird, um auf diese Weise eine Angleichung der gespeicherten Geschwindigkeiten durchzuführen. Die Grundprinzipien für die Plausibilitätsprüfung und Anpassung werden dabei von der Regelungstechnik abgeleitet.

Je nach gewähltem Fahrzeugtyp (beispielsweise Motorrad oder LKW) erstellt das System ferner ggf. unterschiedliche Geschwindigkeitsprofile, die vorzugsweise in unterschiedlichen Geschwindigkeitstabellen vorgehalten bzw. gespeichert werden.

In **Fig. 1** wird auch erkennbar, dass in der Geschwindigkeitstabelle jeweils Zeitklassen k, l, m, n gebildet sind, die je nach Geschwindigkeitsklasse a bis g Blöcke bilden, innerhalb derer einheitliche Durchschnittsgeschwindigkeiten gelten, sofern in den Zeitabschnitten des jeweiligen Blocks (hier Stunden) eine festlegbare Minimalzahl an gemessenen Durchschnittsgeschwindigkeiten jeweils noch nicht erreicht ist. Da hierbei für unterschiedliche Tage üblicherweise unterschiedliche Geschwindigkeitsganglinien entstehen, ist es vorteilhaft, Zeitklassen auch nach Tagen oder Tagesarten zu unterscheiden. So sind Freitag, Samstag und Sonntag jeweils - auch untereinander - unterschiedliche Ganglinien zu erwarten als Montag bis Donnerstag. Daher ist für jeden Tag oder jede Tagesart eine getrennte Verwaltung von Durchschnittsgeschwindigkeiten pro Straßenkategorie sinnvoll. Feiertage können dabei wie Sonntage behandelt werden.

Auf diese Weise sind in der in **Fig. 1** dargestellten Geschwindigkeitstabelle der Straßenkategorie "Highway" somit mehrere (im dargestellten Beispielfall 7) Geschwindigkeitsklassen a, b, c, d, e, f, g gebildet, wodurch vorliegend somit zunächst die Straßenelementklassen (Beispiel Straßenelementklasse S) definiert sind. Die derart gebildeten Straßenelementklassen sind im dargestellten Beispiel schlussendlich zudem noch unterteilt in Zeitklassen k, l, m, n, welche wiederum jeweils mehrere Zeitabschnitte (hier Stundenzeiträume) umfassen.

Dabei enthalten beispielsweise die beiden Tabellenblöcke für 0-8 Uhr und 21-0 Uhr, die durch die Zeitklassen k und n von 0-8 Uhr und 21-0 Uhr innerhalb der Geschwindigkeitsklasse a definiert sind, momentan jeweils noch eine empirisch ermittelte Durchschnittsgeschwindigkeit von knapp 125 km/h für die (vom Kartenhersteller festgelegte) Geschwindigkeitsklasse SpeedCategory0 in der zugehörigen Spalte a.

Sofern der Nutzer also beispielsweise noch nicht häufig sonntags um 1 Uhr nachts gefahren ist, und in den Feldern des Tabellenblocks der zugehörigen Zeitklasse n von 21-0 Uhr sowie der zugehörigen Geschwindigkeitsklasse SpeedCategory0 in Spalte a somit noch in keinem Fall die erforderliche Anzahl an gemessenen Werten von (im Beispielfall) 100 vorliegt, dann wird in dem entsprechenden Tabellenblock die ab Werk eingetragene Durchschnittsgeschwindigkeit von knapp 125 km/h herangezogen, um unter diesen gegebenen Randbedingungen die voraussichtliche Ankunftzeit des Nutzers zu berechnen.

In der Zeitklasse $\ell$ (Bereich 8-16 Uhr) hingegen sind für die Geschwindigkeitsklasse SpeedCategory0 in Spalte a bereits eine Anzahl gemessener Werte aufgrund früherer Nutzerfahrten vorhanden. Im Zeitabschnitt 11 Uhr der Zeitklasse $\ell$ (8-16 Uhr) liegt eine Messwertanzahl von 62 erfassten Datensätzen mit einer zugehörigen Durchschnittsgeschwindigkeit von 116,5 km/h vor. Im vorliegenden Beispiel ist eine Durchschnittsgeschwindigkeit innerhalb eines einstündigen Zeitabschnitts einer Zeitklasse k, l, m, n jedoch erst ab einer Messwertanzahl in Höhe von 100 eigenständig gültig. Daher wird innerhalb der Zeitklasse $\ell$ von 8-16 Uhr der Geschwindigkeitsklasse SpeedCategory0 in Spalte a zunächst noch aus allen enthaltenen Geschwindigkeitswerten des betreffenden Tabellenblocks ein Durchschnitt gebildet. Dieser Geschwindigkeitsdurchschnitt wird sodann innerhalb des fraglichen Tabellenblocks in der Zeitklasse 11 Uhr zur Ermittlung der Ankunftszeit verwendet.

In ähnlicher Weise wird in allen Zeitklassen ohne eigenständig gültige Messwertanzahl verfahren, also bei Messwertanzahlen von 0-99. Messwertanzahlen von über 100 werden nicht eigens vermerkt, wohl aber werden bei weiteren Geschwindigkeitsmessungen hinzukommende Geschwindigkeitswerte dazu herangezogen, die jeweiligen Durchschnittsgeschwindigkeiten in den zugehörigen Tabellenfeldern entsprechend anzupassen.

So ist in der Geschwindigkeitsklasse SpeedCategoryl in Spalte b in jedem der Stunden-Zeitabschnitte in der Zeitklasse n (21-0 Uhr) bereits eine genügende Anzahl an gemessenen Geschwindigkeiten vorhanden, somit kann in jeder dieser Stunden die dort jeweils in der Tabelle eingetragene, unter Berücksichtigung der gemessenen Geschwindigkeiten gebildete Durchschnittsgeschwindigkeit eigenständig zur Berechnung der voraussichtlichen Ankunftszeit innerhalb des jeweiligen Stunden-Zeitabschnitts verwendet werden.

Der Einbezug der Messwertanzahlen und die Aufnahme der zugehörigen gemessenen Geschwindigkeiten erfolgt kontinuierlich während der Fahrt. In Abhängigkeit der Festlegung der Straßenkategorie B und der Geschwindigkeitsklassen a-g durch den Kartenhersteller wird beispielsweise eine Autobahn (in Deutschland klassifiziert als Straßenkategorie Highway) bei einer bestimmten Länge sowie abhängig von zusätzlichen Attributen, wie beispielsweise Zahl der Abfahrten, Ausbauzustand, Vorhandensein von Baustellen usw., in eine Geschwindigkeitsklasse a-g eingeordnet. Im Beispiel einer Autobahn (Straßenkategorie B = Highway) mit SpeedCategory3 kann einer solchen Einordnung beispielsweise eine Baustelle mit der Begrenzung auf 80 km/h zugrundeliegen.

Liegt nun für ein Tabellenfeld, beispielsweise für Highway, Geschwindigkeitsklasse b (SpeedCategoryl), Zeitklasse m, Zeitabschnitt sonntags zwischen 16 und 17 Uhr, eine auf einer genügend großen Anzahl an gemessenen Geschwindigkeiten basierende Durchschnittsgeschwindigkeit vor (wie in **Fig. 1** erkennbar, liegen für diesen Fall zumindest 100 Messungen vor, aus denen eine Durchschnittsgeschwindigkeit von 90,735 km/h gebildet wurde), so werden beim dargestellten Ausführungsbeispiel weitere gemessene Nutzergeschwindigkeiten für diese Straßenklasse an diesem Tag und zu dieser Zeit berücksichtigt und in die Tabelle aufgenommen wie nachfolgend ausgeführt.

Fährt der Nutzer demnach sonntags zwischen 16 und 17 Uhr auf einer Autobahn mit SpeedCategoryl mit konstant 100 km/h, so wird jeder (z.B. pro Zeiteinheit und/oder Straßensegment) so gewonnene Messwert auf den in der Tabelle bereits bestehenden Durchschnittswert gewichtet aufgerechnet. Dies erfolgt beim dargestellten Ausführungsbeispiel mit der nachfolgenden Formel zur Bildung der neuen Durchschnittsgeschwindigkeit Dneu aus der bisherigen Durchschnittsgeschwindigkeit 90,735 km/h und der aktuell gemessenen Nutzergeschwindigkeit von 100 km/h:

$$Dneu = (90,735 \ km/h * 100 + 100 \ km/h) / (100 + 1) = 90,827 \ km/h$$

Es wird hier also mit anderen Worten - bei der Bildung der neuen Durchschnittsgeschwindigkeit zur Aufnahme in die Tabelle - der alte Wert 90,735 km/h hundertmal so stark gewichtet wie der neue Wert 100 km/h.

Auf diese Weise ergibt sich mit fortlaufender Fahrzeit und fortlaufender Akkumulation neuer gemessener Geschwindigkeiten eine allmähliche Annäherung an die aktuelle Nutzergeschwindigkeit. So beträgt die in der Geschwindigkeitstabelle für die betreffende Straßenelementklasse und Uhrzeit nach z.B. 20 weiteren Messungen bzw. Iterationen bei konstant gemessenen 100 km/h eingetragene neue Durchschnittsgeschwindigkeit bereits 92,407 km/h.

Die solchermaßen gesammelten Daten werden sodann bei jeder Routenneuberechnung, d.h. bei einem Rerouting, bei einer Sperrung oder infolge eines TMC-Events, in die Errechnung der voraussichtlichen Ankunftszeit einbezogen.

Auf Basis der so in der Geschwindigkeitstabelle gesammelten Werte kann somit schlussendlich auch eine Route berechnet werden, deren Ankunftszeit in Abhängigkeit der in der Geschwindigkeitstabelle gesammelten Daten ermittelt wird. Dazu ist es zunächst notwendig, für jedes zu befahrende Straßenelement der berechneten Route aus der Geschwindigkeitstabelle den entsprechenden, dort gespeicherten Durchschnitts-Geschwindigkeitswert zu wählen.

Da in der Geschwindigkeitstabelle pro Straßenelementklasse S mehrere - insbesondere tagesabhängige - Uhrzeitklassen vorliegen, für die jeweils eine unterschiedliche Durchschnittsgeschwindigkeit vorliegen kann, ist es hierbei notwendig, dass für jedes Straßenelement zunächst iterativ aufgrund der aktuell prognostizierten Durchschnittsgeschwindigkeiten der zeitlich vor dem fraglichen Straßenelement zu passierenden Straßenelemente festgestellt wird, zu welcher Uhrzeit das in Rede stehende Straßenelement voraussichtlich erreicht wird. Nach der Ermittlung der voraussichtlichen Ankunftszeit an diesem Straßenelement kann sodann die für diese Uhrzeit gespeicherte Durchschnittsgeschwindigkeit verwendet werden.

Das in **Fig. 1** gezeigte Beispiel wird dabei als Referenztabelle für den jeweiligen Nutzer verwendet. Eine derartige Referenztabelle ist somit vorzugsweise für jeden Wochentag und für alle 4 Straßenkategorien Highway, National, Country und Minor vorhanden. Im dargestellten Fall gilt das Profil nur für einen PKW-Fahrer. Ebenso können in der Navigationseinrichtung jedoch auch Referenzprofile für LKW, Motorrad, Fußgänger und Fahrradfahrer vorhanden sein.

Nachfolgend zeigt ein konkretes Beispiel die sukzessive Anpassung der in der Geschwindigkeitstabelle gespeicherten Durchschnittsgeschwindigkeiten und damit der zukünftig berechneten voraussichtlichen Fahrzeiten an die tatsächlich gemessenen Nutzergeschwindigkeiten. Demnach passt sich die berechnete Ankunftszeit sukzessive an das Fahrverhalten des Fahrers an. Fährt er immer schnell, wird die prognostizierte Fahrtzeit für eine entsprechende Strecke mit der Zeit allmählich kürzer ausfallen als bei einem langsameren Fahrer.

Ein Fahrer F fahre aus einem Dorf D am Sonntagnachmittag mit der Familie in den Zoo in die 20 km entfernte Großstadt G. Fahrer F hat dabei genügend Zeit und fährt gemächlich, aber ohne hinderliche Staus und ohne großes Verkehrsaufkommen. Hierbei ergebe sich eine Fahrzeit von 25 Minuten von D bis G.

Die - anhand der in der Geschwindigkeitstabelle zuvor eingetragenen Durchschnittsgeschwindigkeiten - durch die Navigationseinrichtung berechnete Fahrzeit zum Ziel habe hier jedoch nur 20 Minuten betragen. Daraus ergibt sich eine Differenz von +5 Minuten zu der tatsächlichen Fahrzeit. Aus diesen +5 Minuten Zeitunterschied errechnet das System nach Ankunft am Ziel eine Anpassung der verwendeten Durchschnittsgeschwindigkeiten in der Geschwindigkeitstabelle, so dass für dieselbe Strecke zu einer ähnlichen Uhrzeit zukünftig eine voraussichtliche Reisezeit berechnet wird, die (je nach der Art der Bildung des neuen Durchschnittswerts) beispielsweise um +1 Minute länger ist. Die konkrete Bildung der neuen Durchschnittsgeschwindigkeit hängt dabei von vielen Faktoren, insbesondere von den schon zuvor gesammelten Daten und von der jeweils verwendeten Berechnungsformel, ab, siehe auch Formelbeispiel weiter oben.

Am darauf folgenden Montag berechne die Navigationseinrichtung eine voraussichtliche Fahrzeit von 35 Minuten bei gleicher Streckenlänge mit gleichem Start in D und ähnlichem Ziel in der gleichen Großstadt G. Da der Fahrer F aber bei dieser Fahrt im Verkehrsstau steht, benötigt er tatsächlich 40 Minuten für diese Fahrt. Wie oben bei der sonntäglichen Fahrt beschrieben, erfolgt auch hier nach Fahrtende wieder eine Anpassung der in der Tabelle gespeicherten Durchschnittsgeschwindigkeiten im Sinne einer Erhöhung der zukünftig zu ermittelnden voraussichtlichen Ankunftszeit, beispielsweise um +40 Sekunden.

Am selben Montag fährt Fahrer F abends wieder nach Hause, es besteht dabei kein nennenswertes Verkehrsaufkommen, und Fahrer F fährt zudem, da er in Eile ist, von G nach D in 20 Minuten, anstatt der von der Navigationseinrichtung berechneten voraussichtlichen 35 Minuten. Dementsprechend erfolgt wieder eine Anpassung der Durchschnittsgeschwindigkeiten in der Geschwindigkeitstabelle, so dass sich bei der nächsten Berechnung der voraussichtlichen Fahrzeit (am selben Wochentag und um eine ähnliche Uhrzeit) eine um -3 Minuten verkürzte voraussichtliche Fahrtdauer ergibt.

Auf diese Weise erfolgt somit eine permanente Berücksichtigung der tatsächlich gefahrenen Nutzergeschwindigkeiten in Abhängigkeit des Wochentags, der Uhrzeit, der Straßenkategorie und ggf. anderer Attribute und Einflussfaktoren sowie eine dementsprechende sukzessive Aufnahme der entsprechenden gemessenen Werte in die Geschwindigkeitstabelle der Navigationseinrichtung. Hierdurch passt sich die jeweils errechnete voraussichtliche Fahrtdauer allmählich immer besser an das tatsächliche Verhalten des jeweiligen Nutzers in der Vergangenheit an.

Wird durch die in der Geschwindigkeitstabelle gesammelten Messungen offensichtlich, dass ein Fahrer auf bestimmten Straßenkategorien oder Straßenelementklassen besonders langsam bzw. besonders schnell fährt, so können diese optional zusätzlich bei der Routenberechnung unterdrückt bzw. bevorzugt werden.

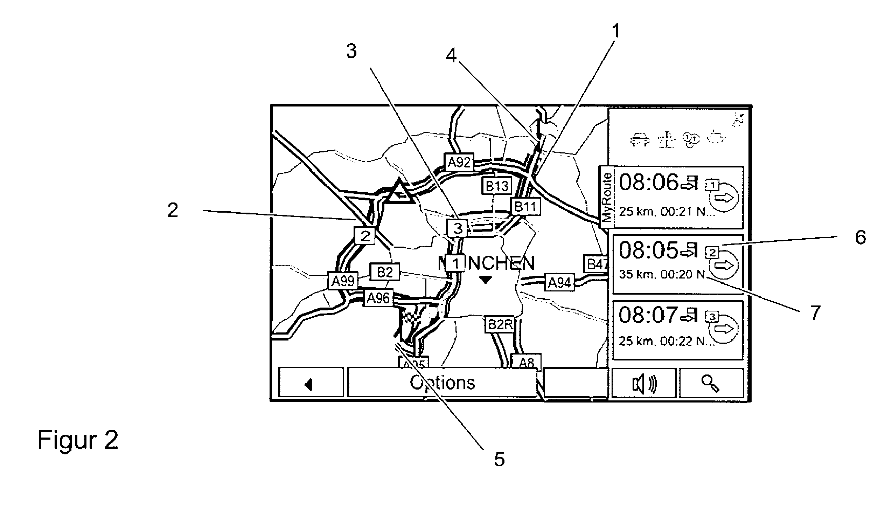

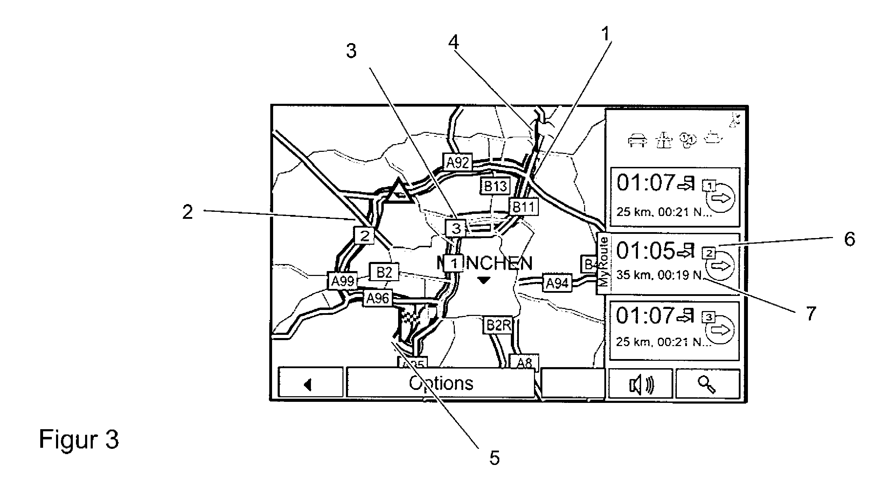

Die **Fig. 2** und **3** zeigen jeweils einen Ausschnitt der Bildschirmdarstellung einer Navigationseinrichtung während des morgendlichen Berufsverkehrs (**Fig. 2**) bzw. während einer nächtlichen Fahrt (**Fig. 3**). Dabei wird insbesondere der Effekt der von der Navigationseinrichtung uhrzeitabhängig ermittelten voraussichtlichen Ankunftszeit ersichtlich.

Im Beispiel handelt es sich um eine Navigationseinrichtung, welche für den Nutzer mehrere Routen 1, 2, 3 zwischen Startpunkt 4 und Zielpunkt 5 ermittelt. In **Fig. 2** findet die Berechnung für den Morgen eines Werktags statt, in **Fig. 3** hingegen für die Nacht, ebenfalls werktags.

Für Autobahnen, auf welcher die Route 2 verläuft, sind die voraussichtlichen, in der Geschwindigkeitstabelle gespeicherten Durchschnittsgeschwindigkeiten bezüglich der Nachtstunden höher als für den Morgen. Bei der erwarteten Ankunftszeit 6 bzw. der voraussichtlichen Fahrzeit 7 schlägt sich dieser Unterschied nieder. Aus diesem Grund wird gemäß **Fig. 3** des Nachts die Fahrt über die Autobahn (Route 2) empfohlen, während gemäß **Fig. 2** am Morgen eine Fahrt über Route 1 empfohlen wird. Obwohl gemäß **Fig. 2** die voraussichtliche Fahrtdauer über Route 2 tatsächlich noch etwas kürzer eingeschätzt wird als die Fahrtdauer über Route 1, wird Route 1 dennoch empfohlen, da bei der zu Grunde liegenden Ausführungsform zudem auch die reine Länge der Fahrtstrecke berücksichtigt wird, welche bei Route 1 erheblich kürzer ist als bei Route 2.

**Patentansprüche**

1. Navigationsverfahren zur Ermittlung der voraussichtlichen Fahrzeit bzw. Ankunftszeit bei der Routenermittlung auf einer digitalen Straßenkarte mittels einer Navigationseinrichtung mit einer Positionsermittlungseinheit, einer Geschwindigkeitsermittlungseinheit, einer Prozessoreinheit, einer Massenspeichereinheit und einer Ein-/ Ausgabeeinrichtung, wobei das Wegenetz der digitalen Straßenkarte in Streckenabschnitte eingeteilt ist und jedem Streckenabschnitt zumindest eine zugehörige Straßenkategorie (B) und jeder Straßenkategorie (B) in einer Geschwindigkeitstabelle eine Durchschnittsgeschwindigkeit zugeordnet ist, wobei die voraussichtliche Fahrtdauer einer Route aus den Längen und den in der Tabelle gespeicherten Durchschnittsgeschwindigkeiten der Streckenabschnitte der Route berechnet wird, und wobei zudem von der Geschwindigkeitsermittlungseinheit gemessene Nutzergeschwindigkeiten in die Geschwindigkeitstabelle aufnehmbar sind,
**dadurch gekennzeichnet,**
**dass** die Geschwindigkeitstabelle für zumindest eine Straßenkategorie (B) in Zeitklassen (k, l, m, n) unterteilt ist, wobei einer Zeitklasse jeweils eigene Durchschnittsgeschwindigkeiten in Abhängigkeit des Wochentags und/oder der Tageszeit (A) zugeordnet sind.

2. Navigationsverfahren nach Anspruch 1,
**dadurch gekennzeichnet,**
**dass** die Geschwindigkeitstabelle für zumindest eine Straßenkategorie (B) in verschiedene Geschwindigkeitsklassen (a, b, c, d, e, f, g) unterteilt ist, wobei einer Geschwindigkeitsklasse jeweils eigene Durchschnittsgeschwindigkeiten zugeordnet sind, insbesondere dass unterschiedlichen Straßenkategorien (B) mit gleicher Geschwindigkeitsklasse (a, b, c, d, e, f, g) jeweils eigene Durchschnittsgeschwindigkeiten zugeordnet sind.

3. Navigationsverfahren nach Anspruch 1 oder 2,
**dadurch gekennzeichnet,**
**dass** die Geschwindigkeitstabelle für zumindest eine Straßenkategorie (B) in Geographieklassen oder Demographieklassen unterteilt ist, wobei einer Geographieklasse oder Demographieklasse jeweils eigene Durchschnittsgeschwindigkeiten in Abhängigkeit eines geographischen oder demographischen Regionsmerkmals zugeordnet sind, und/oder dass die Geschwindigkeitstabelle für zumindest eine Straßenkategorie (B) in Fahrzeugklassen unterteilt ist, wobei einer Fahrzeugklasse jeweils eigene Durchschnittsgeschwindigkeiten in Abhängigkeit eines Fahrzeugtyps zugeordnet sind, und/oder dass die Geschwindigkeitstabelle für zumindest eine Straßenkategorie (B) in Fahrertypklassen unterteilt ist, wobei einer Fahrertypklasse jeweils eigene Durchschnittsgeschwindigkeiten in Abhängigkeit eines Fahrertyps zugeordnet sind.

4. Navigationsverfahren nach einem der Ansprüche 1 bis 3,
**dadurch gekennzeichnet,**
**dass** in einer Geschwindigkeitstabelle Standardwerte für die Durchschnittsgeschwindigkeiten gespeichert sind, die so lange gültig bleiben, bis eine vorgebbare Anzahl gemessener Nutzergeschwindigkeiten innerhalb der jeweiligen Klasse erfasst wurde.

5. Navigationsverfahren nach Anspruch 4,
**dadurch gekennzeichnet,**
**dass** gemessene Nutzergeschwindigkeiten mit einer Gewichtung versehen und mit einer in der Geschwindigkeitstabelle enthaltenen Durchschnittsgeschwindigkeit zu einer neuen Durchschnittsgeschwindigkeit verrechnet und in eine Geschwindigkeitstabelle aufgenommen werden, insbesondere dass bei der Ermittlung der neuen Durchschnittsgeschwindigkeit ein gleitender Durchschnitt von Geschwindigkeitswerten berücksichtigt wird.

6. Navigationsverfahren nach Anspruch 4 oder 5,
**dadurch gekennzeichnet,**

**dass** gemessene Nutzergeschwindigkeiten, die außerhalb eines vorgegebenen, insbesondere straßenkategorieabhängig definierten Extremwert-Intervalls liegen, für die Berechnung einer neuen Durchschnittsgeschwindigkeit außer Betracht bleiben.

7. Navigationsverfahren nach einem der Ansprüche 1 bis 6,
   **dadurch gekennzeichnet,**
   **dass** zumindest eine Zeitklasse (k, l, m, n) mehrere Zeitabschnitte aufweist, wobei insbesondere zumindest eine Zeitklasse (k, l, m, n) zeitlich nicht benachbarte Zeitabschnitte umfasst, und wobei insbesondere verschiedene Zeitklassen (k, l, m, n) in Abhängigkeit des Wochentags oder der Tageszeit (A) unterschiedlich lange Zeiträume abdecken.

8. Navigationsverfahren nach Anspruch 7,
   **dadurch gekennzeichnet,**
   **dass** für einen Zeitabschnitt einer Zeitklasse (k, l, m, n), für welchen eine bestimmte Anzahl an gemessenen Nutzergeschwindigkeiten nicht überschritten ist, ein Mittelwert der in der Zeitklasse jeweils enthaltenen Durchschnittsgeschwindigkeiten gebildet und der Ermittlung der voraussichtlichen Ankunftszeit zugrunde gelegt wird, und/oder dass für einen Zeitabschnitt einer Zeitklasse (k, l, m, n), für welchen eine bestimmte Anzahl an gemessenen Nutzergeschwindigkeiten überschritten ist, die für diesen Zeitabschnitt gespeicherte Durchschnittsgeschwindigkeit berücksichtigt und der Ermittlung der voraussichtlichen Ankunftszeit zugrunde gelegt wird.

9. Navigationsverfahren nach einem der Ansprüche 1 bis 8,
   **dadurch gekennzeichnet,**
   **dass** eine Endkontrolle durchgeführt wird, indem die Gesamtzeit von Start bis Ziel einer Routenplanung analysiert wird und mit dem Ergebnis die Durchschnittsgeschwindigkeiten in der Geschwindigkeitstabelle korrigiert werden.

10. Navigationsverfahren nach einem der Ansprüche 1 bis 9,
    **dadurch gekennzeichnet,**
    **dass** eine in der Navigationseinrichtung gespeicherte oder von der Navigationseinrichtung erstellte Geschwindigkeitstabelle auf einen zentralen Server übertragen wird, insbesondere dass aus den von unterschiedlichen Navigationseinrichtungen auf den Server übertragenen Geschwindigkeitstabellen übergreifende Geschwindigkeitsprofile als zukünftige Werkseinstellungen gebildet werden.

11. Navigationsverfahren nach Anspruch 10,
    **dadurch gekennzeichnet,**
    **dass** ein aus den Geschwindigkeitstabellen unterschiedlicher Navigationseinrichtungen gebildetes Geschwindigkeitsprofil vom Server auf eine Navigationseinrichtung übertragen wird, insbesondere dass bei der Übertragung eines Geschwindigkeitsprofils vom Server auf eine Navigationseinrichtung Durchschnittsgeschwindigkeiten in der Geschwindigkeitstabelle der Navigationseinrichtung mit Werten aus dem Server-Geschwindigkeitsprofil nur dann überschrieben werden, wenn für die betreffenden Tabellenbereiche weniger als eine vorgebbare Anzahl an gesammelten Nutzergeschwindigkeiten vorliegen.

12. Navigationsverfahren nach Anspruch 10 oder 11,
    **dadurch gekennzeichnet,**
    **dass** in der Navigationseinrichtung zumindest zwei Geschwindigkeitstabellen gespeichert sind, wobei eine erste Geschwindigkeitstabelle werksseitig vordefinierte Geschwindigkeitsdaten und eine weitere Geschwindigkeitstabelle zusätzlich nutzerseitig gesammelte Geschwindigkeitsdaten enthält, wobei auf die erste Geschwindigkeitstabelle zurückgegriffen wird, wenn im entsprechenden Bereich der weiteren Geschwindigkeitstabelle weniger als eine vorgebbare Anzahl an gesammelten Nutzergeschwindigkeiten vorliegt, und wobei ansonsten auf die weitere Geschwindigkeitstabelle zugegriffen wird.

13. Computerprogrammprodukt mit auf einem maschinenlesbaren Träger gespeicherten Programmschritten zur Durchführung eines Verfahrens gemäß einem der Ansprüche 1 bis 12, wenn die Programmschritte von einer programmierbaren Prozessoreinheit ausgeführt werden.

14. Digitales Speichermedium mit elektronisch auslesbaren Steuersignalen, die mit einer programmierbaren Prozessoreinheit dergestalt zusammenwirken können, dass ein Verfahren gemäß einem der Ansprüche 1 bis 12 ausgeführt wird.

15. Navigationseinrichtung zur Ermittlung der voraussichtlichen Fahrzeit bzw. Ankunftszeit bei der Routenermittlung auf einer digitalen Straßenkarte, die Navigationseinrichtung umfassend eine Positionsermittlungseinheit, eine Geschwindigkeitsermittlungseinheit, eine Prozessoreinheit, eine Massenspeichereinheit und eine Ein-/ Ausgabeeinrichtung, die digitale Straßenkarte umfassend ein in Streckenabschnitte eingeteiltes Wegenetz, wobei das Wegenetz in Streckenabschnitte eingeteilt ist und jedem Streckenabschnitt zumindest eine zugehörige Straßenkategorie (B) und jeder Straßenkategorie (B) in einer Geschwindigkeitstabelle eine Durchschnittsgeschwindigkeit zugeordnet ist, wobei die voraussichtliche Fahrtdauer einer Route aus den Längen und den gespeicherten Durchschnittsgeschwindigkeiten der Streckenabschnitte der Route berechenbar ist, wobei von der Geschwindigkeitsermittlungseinheit gemessene Nutzergeschwindigkeiten in die Geschwindigkeitstabelle aufnehmbar sind, und wobei die Prozessoreinheit zum Ausführen eines Computerprogrammprodukts nach Anspruch 13, zum Auslesen eines Speichermediums nach Anspruch 14 oder zur Durchführung eines Verfahrens gemäß einem der Ansprüche 1 bis 12 eingerichtet ist.

| A | B | a | | b | | c | | d | | e | | f | | g | |
| Weekday/Hc | StreetCat | SpeedCat0 | | SpeedCat1 | | SpeedCat2 | | SpeedCat3 | | SpeedCat4 | | SpeedCat5 | | SpeedCat6 | |
| | | Branch Count | Summed UpMPS | Branch Count | Summed UpMPS | Branch Count | Summed UpMPS | Branch Count | Summed UpMPS | Branch Count | Summed UpMPS | Branch Count | Summed UpMPS | h Count | Summed UpMPS |
|---|---|---|---|---|---|---|---|---|---|---|---|---|---|---|---|
| Sunday/0 | HIGHWAYS | 0 | 124,999 | 0 | 110,999 | 0 | 100 | 0 | 79,99 | 0 | 65 | 0 | 64 | 0 | 39,998 |
| Sunday/1 | HIGHWAYS | 0 | 124,999 | 0 | 110,999 | 0 | 100 | 0 | 79,99 | 0 | 65 | 0 | 64 | 0 | 39,998 |
| Sunday/2 | HIGHWAYS | 0 | 124,999 | 0 | 110,999 | 0 | 100 | 0 | 79,99 | 0 | 65 | 0 | 64 | 0 | 39,998 |
| Sunday/3 | HIGHWAYS | 0 | 124,999 | 0 | 110,999 | 0 | 100 | 0 | 79,99 | 0 | 65 | 0 | 64 | 0 | 39,998 |
| Sunday/4 | HIGHWAYS | 0 | 124,999 | 0 | 110,999 | 0 | 100 | 0 | 79,99 | 0 | 65 | 0 | 64 | 0 | 39,998 |
| Sunday/5 | HIGHWAYS | 0 | 124,999 | 0 | 110,999 | 0 | 100 | 0 | 79,99 | 0 | 65 | 0 | 64 | 0 | 39,998 |
| Sunday/6 | HIGHWAYS | 0 | 124,999 | 0 | 110,999 | 0 | 100 | 0 | 79,99 | 0 | 65 | 0 | 64 | 0 | 39,998 |
| Sunday/7 | HIGHWAYS | 0 | 124,999 | 0 | 110,999 | 0 | 100 | 0 | 79,99 | 0 | 65 | 0 | 64 | 0 | 39,998 |
| Sunday/8 | HIGHWAYS | 0 | 124,999 | 0 | 110,999 | 0 | 100 | 0 | 79,99 | 0 | 65 | 0 | 64 | 0 | 39,998 |
| Sunday/9 | HIGHWAYS | 0 | 124,999 | 0 | 110,999 | 0 | 100 | 0 | | 0 | 65 | 0 | 64 | 0 | 39,998 |
| Sunday/10 | HIGHWAYS | 100 | 128,921 | 100 | 119,395 | 100 | 97,085 | | | 0 | 65 | 0 | 64 | 0 | 39,998 |
| Sunday/11 | HIGHWAYS | 62 | 116,489 | 44 | 117,155 | 100 | 104,76 | | 79,49 | 100 | 58,739 | 0 | 64 | 0 | 39,998 |
| Sunday/12 | HIGHWAYS | 100 | 135,744 | 100 | 116,394 | 73 | 111,169 | 100 | 87,36 | 23 | 58,955 | 0 | 64 | 0 | 39,998 |
| Sunday/13 | HIGHWAYS | 100 | 137,939 | 100 | 115,003 | 100 | 121,88 | 10 | 80,23 | 0 | 65 | 0 | 64 | 0 | 39,998 |
| Sunday/14 | HIGHWAYS | 55 | 136,005 | 0 | 110,999 | 100 | 99,99 | 10 | 72,63 | 100 | 51,811 | 0 | 64 | 0 | 39,998 |
| Sunday/15 | HIGHWAYS | 100 | 127,991 | 0 | 110,999 | 0 | 100 | 100 | 59,35 | 0 | 65 | 0 | 64 | 0 | 39,998 |
| Sunday/16 | HIGHWAYS | 100 | 134,688 | 100 | 90,735 | 100 | 117,595 | 100 | 125,43 | 100 | 81,995 | 0 | 64 | 0 | 39,998 |
| Sunday/17 | HIGHWAYS | 100 | 116,071 | 100 | 100,329 | 100 | 98,28 | 100 | 86,64 | 100 | 80,719 | 10 | 62,889 | 0 | 39,998 |
| Sunday/18 | HIGHWAYS | 53 | 113,105 | 100 | 103,974 | 11 | 88,23 | 100 | 74,33 | 10 | 54,869 | 0 | 64 | 0 | 39,998 |
| Sunday/19 | HIGHWAYS | 100 | 121,699 | 56 | 101,661 | 100 | 111,45 | 100 | 121,22 | 0 | 65 | 0 | 64 | 0 | 39,998 |
| Sunday/20 | HIGHWAYS | 100 | 134,147 | 100 | 108,533 | 100 | 109,42 | 100 | 85,63 | 100 | 64,5 | 0 | 64 | 0 | 39,998 |
| Sunday/21 | HIGHWAYS | 0 | 124,999 | 100 | 110,117 | 100 | 111,0 | 100 | 95,40 | 0 | 65 | 0 | 64 | 0 | 39,998 |
| Sunday/22 | HIGHWAYS | 0 | 124,999 | 100 | 118,967 | 100 | 96,47 | 100 | 63,04 | 56 | 68,005 | 0 | 64 | 0 | 39,998 |
| Sunday/23 | HIGHWAYS | 0 | 124,999 | 100 | 106,845 | 0 | 100 | 0 | 79,99 | 0 | 65 | 0 | 64 | 0 | 39,998 |

Straßen-Element-klasse S

Figur 1

Figur 2

Figur 3

EP 2 224 212 A1

**Europäisches Patentamt**
**European Patent Office**
**Office européen des brevets**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | EP 1 172 631 A1 (BOSCH GMBH ROBERT [DE]) 16. Januar 2002 (2002-01-16) * Absatz [0017] - Absatz [0026] * ----- | 1,2,7, 13-15 | INV. G01C21/34 |
| Y | DE 10 2005 004332 A1 (BOSCH GMBH ROBERT [DE]) 3. August 2006 (2006-08-03) * Absatz [0011] - Absatz [0021] * * Absatz [0030] * ----- | 1,2,7, 13-15 | |

**RECHERCHIERTE SACHGEBIETE (IPC)**

G01C

Der vorliegende Recherchenbericht wurde für alle Patentansprüche erstellt

| Recherchenort | Abschlußdatum der Recherche | Prüfer |
|---|---|---|
| Den Haag | 28. Mai 2010 | Hoekstra, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 15 3794

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-05-2010

| Im Recherchenbericht angeführtes Patentdokument | Datum der Veröffentlichung | Mitglied(er) der Patentfamilie | Datum der Veröffentlichung |
|---|---|---|---|
| EP 1172631 A1 | 16-01-2002 | DE 10030931 A1 | 17-01-2002 |
| DE 102005004332 A1 | 03-08-2006 | EP 1848964 A1<br>WO 2006082136 A1<br>JP 2008528988 T | 31-10-2007<br>10-08-2006<br>31-07-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1172631 A